# FASCICULE DE BREVET EUROPEEN

(11) **EP 3 895 931 B1**
(45) Date de publication et mention de la délivrance du brevet: **13.03.2024**
(21) Numéro de dépôt: 21168891.6
(22) Date de dépôt: 16.04.2021
(51) Int. Cl.: B60L 53/16, B60L 53/18, H01B 7/00, H01R 13/66, H02J 7/00

(54) **CÂBLE ET BORNE DE RECHARGE POUR VÉLO ÉLECTRIQUE OU À ASSISTANCE ELECTRIQUE**
KABEL UND LADESTATION FÜR ELEKTRISCHE ODER ELEKTRISCH UNTERSTÜTZTE FAHRRÄDER
CABLE AND TERMINAL FOR CHARGING ELECTRIC OR ELECTRICALLY-ASSISTED BICYCLE

(30) Priorité: 17.04.2020 FR 2003880
(43) Date de publication de la demande: 20.10.2021
(73) Titulaire: Adeos, 35600 Sainte-Marie (FR); GIP Campus Esprit Industries, 35600 Redon (FR)
(72) Inventeur: TOSATTI, Gabriele, 35600 Bains sur Oust (FR); THAPPILY, Praveen, 35600 Redon (FR)
(74) Mandataire: Regimbeau

(56) Documents cités:
- EP-A2- 2 292 460
- US-A1- 2012 135 634
- US-A1- 2016 185 244
- US-B2- 9 308 825

## Description

L'invention concerne un câble destiné à recharger une batterie de vélo électrique ou à assistance électrique sur une borne de recharge, ainsi que la borne de recharge, devant recharger la batterie du vélo électrique ou à assistance électrique.

Le domaine de l'invention concerne les vélos munis d'une batterie électrique servant ou aidant à sa propulsion.

La tension de charge de la batterie de ces vélos peut actuellement différer entre les constructeurs et d'une marque à l'autre.

Il se pose le problème que l'utilisateur n'utilise pas le bon câble pour connecter le chargeur à la batterie ou connecte mal le câble au chargeur et à la batterie, ce qui engendre des risques d'électrocution de l'utilisateur et des risques de casse des connecteurs du câble, du chargeur et de la batterie. Par exemple, US2012/135634 décrit un câble de recharge pour véhicules électriques, avec un boîtier, des contacts électriques et des moyens d'identification, qui sont conçus pour transmettre un signal d'identification à la station de recharge à la suite de la connexion.

Un objectif de l'invention est d'obtenir un câble et une borne de recharge, qui résolvent ce problème mentionné ci-dessus pour protéger l'utilisateur, ainsi que le matériel.

A cet effet, un premier objet de l'invention est un câble suivant la revendication 1.

Grâce à l'invention, la borne de recharge reconnaît le câble grâce au code qu'il lui envoie, ce qui indique que l'utilisateur a branché le bon câble sur la borne de recharge. Ainsi, lorsque l'utilisateur branche un autre câble non adéquat, cela est reconnu par la borne de recharge par le fait que cet autre câble n'envoie pas le bon code ou pas de code à la borne de recharge, ce qui évite dans ce cas qu'un courant de charge soit envoyé par la borne de recharge au câble et évite par conséquent de mettre en danger l'utilisateur et d'abîmer la borne de recharge, le câble et la batterie.

Suivant un mode de réalisation de l'invention, le circuit de génération est configuré pour ne pas envoyer le code de connexion prescrit aux deux conducteurs électriques de communication de code lorsque le détecteur de tension électrique n'a pas détecté qu'une tension électrique prescrite est présente entre les deux conducteurs électriques de détection de tension.

L'invention sera mieux comprise à la lecture de la description qui va suivre, donnée uniquement à titre d'exemple non limitatif en référence aux figures ci-dessous des dessins annexés.

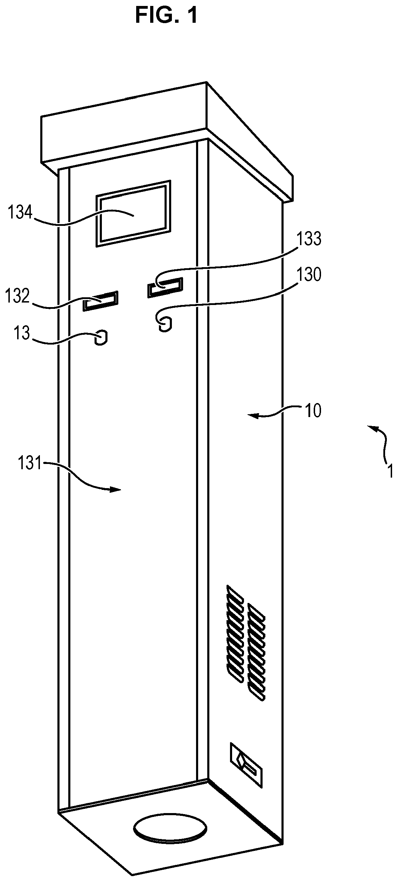

[Fig. 1] représente une vue schématique en perspective d'une borne de recharge suivant un mode de réalisation de l'invention.
[Fig. 2] représente un synoptique modulaire d'un câble suivant un mode de réalisation de l'invention.
[Fig. 3] représente un synoptique modulaire d'une borne de recharge suivant un mode de réalisation de l'invention.
[Fig. 4] représente un synoptique modulaire d'un câble suivant un mode de réalisation de l'invention, branché entre une borne de recharge suivant un mode de réalisation de l'invention et une batterie d'un vélo électrique ou à assistance électrique, certains des éléments de la figure 3 n'ayant pas été représentés à la figure 4 mais pouvant être présents.

Aux figures, 1, 3 et 4, une borne 1 de recharge suivant l'invention comporte un boîtier 10, qui est fixé au sol et qui comprend les composants mécaniques et électriques de la borne 1 de recharge, qui seront décrits ci-après.

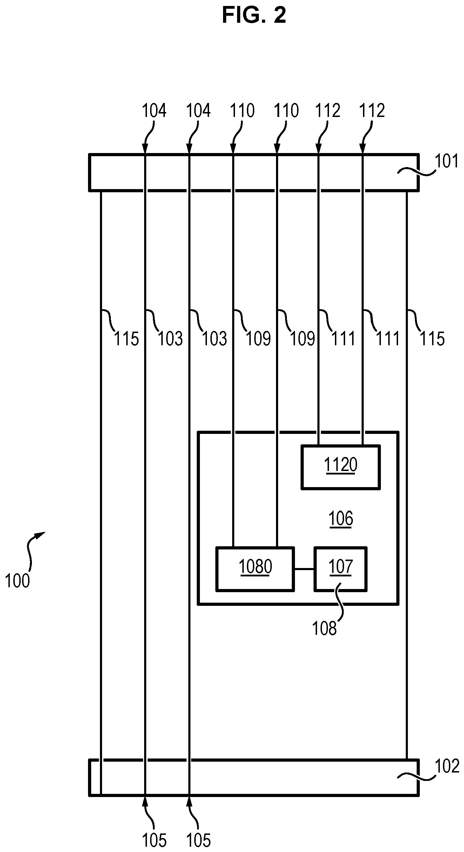

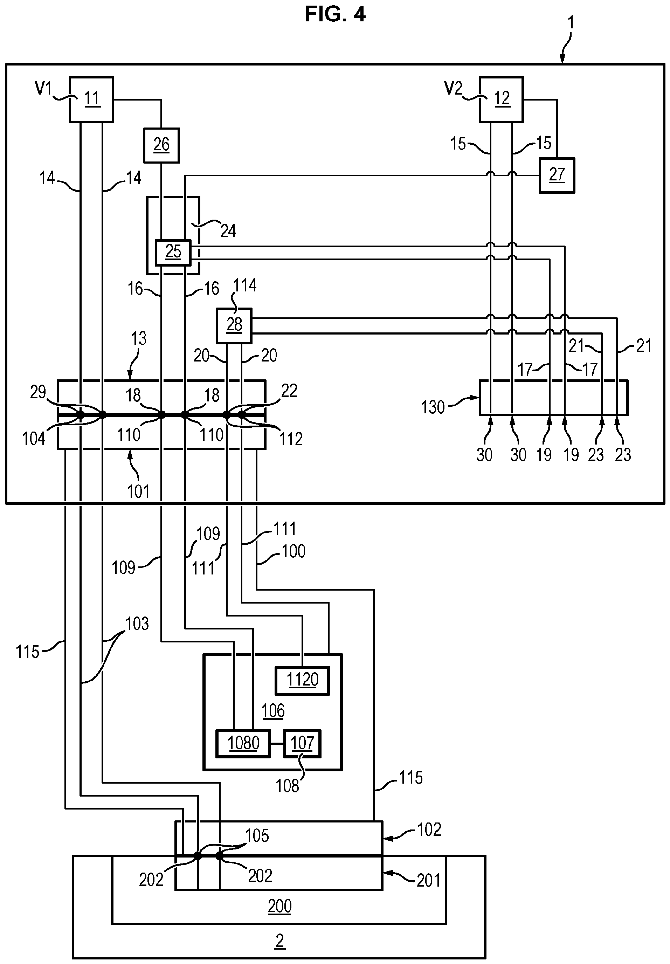

On décrit d'abord ci-dessous en référence aux figures 2 et 4 un câble électrique 100 suivant l'invention. Le câble 100 est destiné à être branché d'une part à la borne 1 de recharge suivant l'invention et d'autre part à une batterie 200 d'un vélo 2 électrique ou à assistance électrique. Bien entendu, l'invention peut être appliquée à tout véhicule 2 entièrement électrique ou partiellement électrique (par exemple vélo, moto, drones, bateau, camping-car, engins agricoles), la batterie 200 étant prévue sur ce véhicule 2.

Le câble 100 est un élément amovible pouvant être séparé de la borne 1 de recharge et par exemple emmené par l'utilisateur du vélo 2.

Le câble 100 de recharge comporte un premier connecteur électrique 101, destiné à être connecté au connecteur d'entrée 13 et/ou 130 de la borne 1 de recharge. Le connecteur d'entrée 13 et/ou 130 de la borne 1 de recharge est accessible de l'extérieur de la borne 1 de recharge est prévu sur une surface extérieure 131 du boîtier 10, par exemple sur sa face avant 131. La borne 1 de recharge peut être de forme oblongue verticale, par exemple parallélépipédique ou autre.

Le câble 100 comporte également un deuxième connecteur électrique 102, destiné à être connecté à un autre connecteur 201 de la batterie 200 à recharger du vélo 2 électrique ou à assistance électrique. Les composants décrits ci-dessous du câble 100 sont contenus dans une gaine extérieure 115 électriquement isolante du câble 100, s'étendant du premier connecteur 101 au deuxième connecteur 102 dans le sens de la longueur. Dans le câble 100, des conducteurs électriques 103 de réception de courant de charge sont connectés à des premières extrémités 104 de réception de courant de charge présentes dans le premier connecteur 101 et à des deuxièmes extrémités 105 de réception de courant de charge présentes dans le deuxième connecteur 102. Les premières extrémités 104 de réception de courant de charge sont destinées à être connectées à des extrémités 29 et/ou 30 d'envoi de courant de charge présentes dans le connecteur d'entrée 13 et/ou 130. Les deuxièmes extrémités 105 de réception de courant de charge sont destinées à être connectées à des extrémités 202 d'envoi de courant de charge présentes dans l'autre connecteur 201.

Dans un mode de réalisation de l'invention, les premières extrémités 104 de réception de courant de charge (ainsi que les autres extrémités présentes dans le premier connecteur 101) peuvent être des broches saillantes de type mâle, tandis que le connecteur d'entrée 13 et/ou 130 peut être du type à fiches creuses ou femelles, dans lesquelles peuvent être insérées ces broches pour assurer le branchement électrique lorsque le premier connecteur 101 est fixé au connecteur d'entrée 13 et/ou 130. Bien entendu, dans un autre mode de réalisation de l'invention, le connecteur d'entrée 13 et/ou 130 peut être du type à broches saillantes de type mâle, tandis que les premières extrémités 104 de réception de courant de charge (ainsi que les autres extrémités présentes dans le premier connecteur 101) peuvent être du type à fiches creuses ou femelles, dans lesquelles peuvent être insérées ces broches pour assurer le branchement électrique lorsque le premier connecteur 101 est fixé au connecteur d'entrée 13 et/ou 130.

Dans un mode de réalisation de l'invention, les deuxièmes extrémités 105 de réception de courant de charge (ainsi que les autres extrémités présentes dans le deuxième connecteur 102) peuvent être des broches saillantes de type mâle, tandis que l'autre connecteur 201 de la batterie 200 à recharger du vélo 2 électrique ou à assistance électrique peut être du type à fiches creuses ou femelles, dans lesquelles peuvent être insérées ces broches pour assurer le branchement électrique lorsque le deuxième connecteur 102 est fixé à cet autre connecteur 201. Bien entendu, dans un autre mode de réalisation de l'invention, l'autre connecteur 201 de la batterie 200 à recharger du vélo 2 électrique ou à assistance électrique peut être du type à broches saillantes de type mâle, tandis que les deuxièmes extrémités 105 de réception de courant de charge (ainsi que les autres extrémités présentes dans le deuxième connecteur 102) peuvent être du type à fiches creuses ou femelles, dans lesquelles peuvent être insérées ces broches pour assurer le branchement électrique lorsque le deuxième connecteur 102 est fixé à cet autre connecteur 201.

Dans le câble 100 est enregistré de manière permanente un code 107 de connexion prescrit. Dans le câble 100 se trouve un circuit 106 de génération du code 107 de connexion prescrit, ce circuit 106 comportant une mémoire permanente 108, dans laquelle est enregistré le code 107 de connexion prescrit, et une unité 1080 de commande. Le circuit 106 de génération du code 107 de connexion prescrit peut être mise en oeuvre sous la forme d'un circuit électronique à microprocesseur, par exemple sur une petite carte de circuit imprimé. Dans le câble se trouvent également deux (ou plus de deux) conducteurs électriques 109 de communication de code, qui sont reliés à deux (ou plus de deux) extrémités 110 de communication présentes dans le premier connecteur 101. Les extrémités 110 de communication sont destinées à être connectées à des extrémités 18 et/ou 19 de communication présentes dans le connecteur d'entrée 13 et/ou 130. Les extrémités 110 de communication et les extrémités 18 et/ou 19 de communication présentes dans le connecteur d'entrée 13 et/ou 130 peuvent être du type UART (émetteur-récepteur universel asynchrone), connexion USB (bus série universel) ou autres. Le code 107 de connexion prescrit peut être un code binaire sur un ou plusieurs bits.

Dans le câble se trouvent deux (ou plus de deux) conducteurs électriques 111 de détection de tension, qui sont reliés à deux (ou plus de deux) extrémités 112 de détection de tension présentes dans le premier connecteur 101. Les extrémités 112 de détection de tension sont destinées à être connectées à des extrémités 22 et/ou 23 de fourniture de tension présentes dans le connecteur d'entrée 13 et/ou 130.

Dans le câble 100, le circuit 106 de génération comporte un détecteur 1120 de tension électrique, qui est relié aux conducteurs électriques 111 de détection de tension. Le circuit 106 de génération du code 107 de connexion prescrit est configuré pour envoyer par son unité 1080 de commande le code 107 de connexion prescrit, présent dans la mémoire permanente 108, aux deux conducteurs électriques 109 de communication de code lorsque le détecteur 1120 de tension électrique a détecté qu'une tension électrique prescrite 114 (non nulle) est présente entre les deux conducteurs électriques 111 de détection de tension. La valeur de la tension électrique prescrite 114 est préenregistrée dans la mémoire permanente 108 ou dans le détecteur 1120. Le détecteur 1120 compare la tension électrique présente entre les deux conducteurs électriques 111 de détection de tension à la tension électrique prescrite 114 préenregistrée dans la mémoire permanente 108 ou dans le détecteur 1120, pour fournir en cas d'égalité un signal indiquant que le détecteur 1120 de tension électrique a détecté la tension électrique prescrite 114 entre les deux conducteurs électriques 111 de détection de tension et pour fournir en cas d'inégalité un signal indiquant que le détecteur 1120 de tension électrique n'a pas détecté la tension électrique prescrite 114 entre les deux conducteurs électriques 111 de détection de tension. La tension électrique prescrite 114 correspond à une tension d'alimentation du circuit 106 de génération de code ou est autre.

Ainsi, lorsque le premier connecteur 101 du câble 100 est branché au connecteur 13 ou 130 d'entrée de la borne 1 de recharge, le câble 100 envoie le code 107 de connexion prescrit, présent dans la mémoire permanente 108, aux extrémités 110 de communication de son premier connecteur 101, et de là à la borne 1 de recharge via les extrémités 110 de communication du connecteur 13 ou 130 d'entrée, lorsque le détecteur 1120 de tension électrique du câble 100 a détecté la présence de la tension électrique prescrite 114, qui a été envoyée par les extrémités 22 ou 23 du connecteur 13 ou 130 d'entrée aux extrémités 112 de détection de tension du premier connecteur 101.

Le circuit 106 de génération du code 107 de connexion prescrit est configuré pour ne pas envoyer par son unité 1080 de commande le code 107 de connexion prescrit, présent dans la mémoire permanente 108, aux deux conducteurs électriques 109 de communication de code lorsque le détecteur 1120 de tension électrique n'a pas détecté que la tension électrique prescrite 114 est présente entre les deux conducteurs électriques 111 de détection de tension.

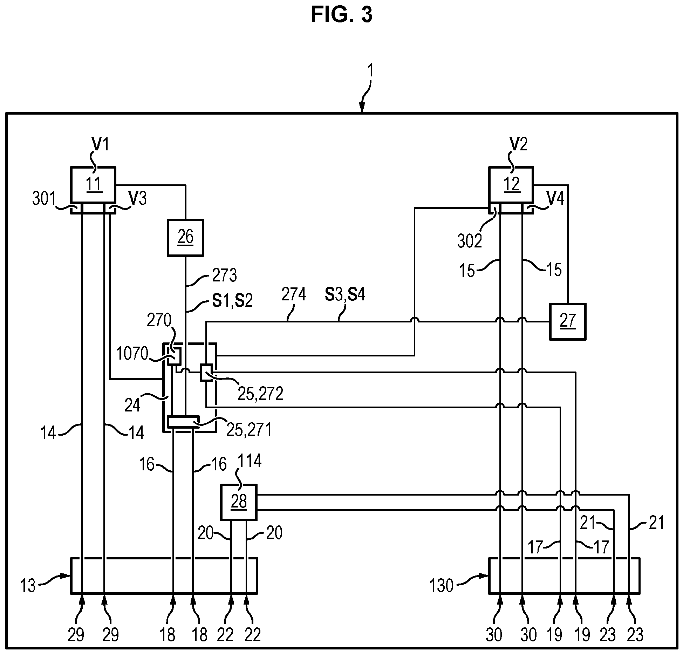

On décrit ci-dessous en référence aux figures 3 et 4 la borne 1 de recharge suivant l'invention. En plus des éléments mentionnés ci-dessus, la borne 1 de recharge comporte un, deux ou plus de deux chargeurs, tels que par exemple un premier chargeur 11 et un deuxième chargeur 12. Suivant un mode de réalisation de l'invention, la borne 1 de recharge et le chargeur 11 et/ou 12 peuvent être raccordés à un réseau de distribution d'électricité pour les alimenter en électricité, et /ou la borne 11 de recharge comporte des modules de production d'énergie électrique renouvelable, par exemple à panneau(x) photovoltaïque(s) et/ou éolienne(s) et/ou énergie hydroélectrique et/ou pile(s) à combustible d'hydrogène et/ou autres, pour alimenter en électricité la borne 1 de recharge et le chargeur 11 et/ou 12. Cela permet d'alimenter les bornes 1 avec des énergies renouvelables et d'assurer la gestion d'une alimentation hybride multi-sources. Suivant un mode de réalisation de l'invention, la borne 1 de recharge et/ou l'unité 24 de contrôle peut gérer les sources d'énergie extérieures disponibles : réseau électrique et le ou les modules de production d'énergie électrique renouvelable. Suivant un mode de réalisation de l'invention, la borne 1 de recharge et/ou l'unité 24 de contrôle peut gérer un dispositif de suivi du soleil (en anglais : tracker), et/ou une éolienne en fonction de la vitesse du vent, et/ou un micro-turbinage en fonction du débit d'eau, et/ou une pile à combustible en fonction des réserves d'hydrogène. On décrit ci-dessous les éléments associés dans la borne 1 de recharge au premier chargeur 11 lui-même associé au premier connecteur 13 d'entrée, ainsi que le procédé de charge utilisant le premier chargeur 11. Bien entendu, il pourrait être prévu dans la borne 1 de recharge un seul chargeur 11 et les éléments associés à celui-ci, décrits ci-dessous. Dans la borne 1 de recharge se trouvent des premiers conducteurs électriques 14 d'envoi de courant de charge, qui sont connectés entre le premier chargeur 11 et les extrémités 29 d'envoi de courant de charge présentes dans le premier connecteur 13 d'entrée.

Dans la borne 1 de recharge se trouvent au moins deux premiers conducteurs électriques 16 de détection de code, qui sont reliés aux deux premières extrémités 18 de communication présentes dans le premier connecteur 13 d'entrée. Dans la borne 1 de recharge se trouvent au moins deux premiers conducteurs électriques 20 de fourniture de la tension prescrite 114. Ces deux premiers conducteurs électriques 20 de fourniture de la tension prescrite 114 sont reliés aux deux premières extrémités 22 de fourniture de la tension prescrite 114, présentes dans le premier connecteur 13 d'entrée. Ainsi, lorsque le premier connecteur 101 du câble 100 est branché au connecteur 13 d'entrée de la borne 1 de recharge, les extrémités 112 de détection de tension sont connectées aux extrémités 22 de fourniture de tension, les extrémités 110 de communication sont connectées aux extrémités 18 de communication et les premières extrémités 104 de réception de courant de charge sont connectées aux extrémités 29 d'envoi de courant de charge. La borne 1 de recharge envoie alors la tension prescrite 114 depuis les deux premiers conducteurs électriques 20 de fourniture et via les deux premières extrémités 22 de fourniture de la tension prescrite 114, les extrémités 112 de détection de tension et les conducteurs électriques 111 de détection de tension au détecteur 1120 de tension électrique. Lorsque le détecteur 1120 de tension électrique du câble 100 a détecté la tension électrique prescrite 114 sur les conducteurs électriques 111 de détection de tension, le circuit 106 de génération du câble 100 envoie le code 107 de connexion prescrit aux conducteurs électriques 109 de communication de code et de là aux premiers conducteurs électriques 16 de détection de code via les extrémités 110 de communication et les extrémités 18 de communication.

Dans la borne 1 de recharge se trouve une unité 24 de contrôle comportant un détecteur 25 du code 107 de connexion, qui est connecté aux deux premiers conducteurs électriques 16 de détection de code. Le détecteur 25 est apte à détecter le code 107 de connexion prescrit lorsque ce code 107 de connexion prescrit est présent sur les premiers conducteurs électriques 16 de détection de code. L'unité 24 de contrôle peut être mise en oeuvre sous la forme d'un circuit électronique ayant un microcontrôleur, par exemple sur une ou plusieurs cartes de circuit imprimés ou autres. L'unité 24 de contrôle peut comporter une autre mémoire permanente 270 dans laquelle est préenregistré un code de connexion de vérification 1070. Le code de connexion de vérification 1070 peut être un code binaire sur un ou plusieurs bits.

Suivant un mode de réalisation de l'invention, lorsque le détecteur 25 a détecté le code 107 de connexion prescrit sur les premiers conducteurs électriques 16 de détection de code, le détecteur 25 émet sur sa première sortie 273 un premier signal S1 de présence de code de connexion prescrit ou d'activation du chargeur 11. Lorsque le détecteur 25 n'a pas détecté le code 107 de connexion prescrit sur les premiers conducteurs électriques 16 de détection de code, le détecteur 25 émet sur sa première sortie 273 un premier signal S2 d'absence de code de connexion prescrit ou de désactivation du chargeur 11. Le détecteur 25 peut comprendre un premier comparateur 271 de code de connexion, configuré pour comparer le code 107 de connexion présent sur les premiers conducteurs électriques 16 de détection de code au code de connexion de vérification 1070 présent dans la mémoire permanente 270. Ce code de connexion de vérification 1070 présent dans la mémoire permanente 270 est le code de connexion 107 prescrit. Lorsque le comparateur 271 ayant effectué la comparaison indique que le code 107 de connexion présent sur les premiers conducteurs électriques 16 de détection de code est égal au code de connexion de vérification 1070 présent dans la mémoire permanente 270, le comparateur 271 indique qu'il a détecté le code de connexion prescrit 107 et fournit le premier signal S1 de présence de code de connexion prescrit ou d'activation du chargeur 11. Lorsque le comparateur 271 ayant effectué la comparaison indique que le code présent sur les premiers conducteurs électriques 16 de détection de code n'est pas égal au code de connexion de vérification 1070 présent dans la mémoire permanente 270, le comparateur 271 indique qu'il n'a pas détecté le code de connexion prescrit 107 et fournit le premier signal S2 d'absence de code de connexion prescrit ou de désactivation du chargeur 11.

L'unité 24 de contrôle est configurée pour activer le premier chargeur 11, lorsque le détecteur 25 de code a détecté le code 107 de connexion prescrit sur les deux premiers conducteurs électriques 16 de détection de code (par exemple en présence du premier signal S1 de présence de code de connexion prescrit ou d'activation du chargeur 11). Ainsi, lorsque le premier connecteur 101 du câble 100 est branché au connecteur 13 d'entrée de la borne 1 de recharge et lorsque le deuxième connecteur 102 est branché à l'autre connecteur 201 de la batterie 2, l'unité 24 de contrôle active le premier chargeur 11 lorsque le détecteur 25 de code a détecté la présence du code 107 de connexion prescrit sur les deux premiers conducteurs électriques 16 de détection de code. Lorsque le premier chargeur 11 est ainsi activé, le premier chargeur 11 envoie du courant de charge selon un profil de courant et de tension prescrit dans celui-ci aux premiers conducteurs électriques 14 d'envoi de courant de charge, et de là à la batterie 200 via les extrémités 29 d'envoi de courant de charge, les premières extrémités 104 de réception de courant de charge, les conducteurs électriques 103 de réception de courant de charge, les deuxièmes extrémités 105 de réception de courant de charge et les extrémités 202 d'envoi de courant de charge présentes dans l'autre connecteur 201. Ainsi, dans ce cas, la borne 1 de recharge a reconnu le code 107 de connexion prescrit du câble 100, ce qui fait que la borne 1 de recharge charge ou recharge la batterie 200 en envoyant le courant de charge depuis la borne 1 de recharge via le câble 100 à la batterie 200 du vélo 2 électrique ou usage électrique.

L'unité 24 de contrôle est configurée pour désactiver le premier chargeur 11, lorsque le détecteur 25 de code n'a pas détecté le code 107 de connexion prescrit sur les deux premiers conducteurs électriques 16 de détection de code (par exemple en présence du premier signal S2 d'absence de code de connexion prescrit ou de désactivation du chargeur 11). Ainsi, lorsque le premier connecteur 101 du câble 100 est branché au connecteur 13 d'entrée de la borne 1 de recharge et lorsque le deuxième connecteur 102 est branché à l'autre connecteur 201 de la batterie 2, l'unité 24 de contrôle désactive le premier chargeur 11 lorsque le détecteur 25 de code n'a pas détecté la présence du code 107 de connexion prescrit sur les deux premiers conducteurs électriques 16 de détection de code. Lorsque le premier chargeur 11 est ainsi désactivé, le premier chargeur 11 n'envoie pas de courant de charge aux premiers conducteurs électriques 14 d'envoi de courant de charge, ni à la batterie 200 via les extrémités 29 d'envoi de courant de charge, les premières extrémités 104 de réception de courant de charge, les conducteurs électriques 103 de réception de courant de charge, les deuxièmes extrémités 105 de réception de courant de charge et les extrémités 202 d'envoi de courant de charge présentes dans l'autre connecteur 201. Ainsi, dans ce cas, bien que la batterie 200 du vélo 2 électrique ou usage électrique soit connectée par le câble 100 à la borne 1 de recharge, la borne 1 de recharge n'a pas reconnu le code 107 de connexion prescrit, ce qui fait que la borne 1 de recharge ne recharge pas la batterie 200. Le câble 100 peut ainsi être authentifié par la borne 1 de recharge.

Suivant un mode de réalisation de l'invention, la borne 1 de recharge comporte une source 28 de fourniture de la tension prescrite 114, qui est reliée aux deux conducteurs électriques 20 de fourniture, pour fournir en permanence la tension prescrite 114 sur les deux extrémités 22 de fourniture de la tension prescrite 114 du connecteur 13 d'entrée.

Suivant un mode de réalisation de l'invention, on décrit ci-dessous les éléments associés dans la borne 1 de recharge au deuxième chargeur 12 et au deuxième connecteur 130 d'entrée, qui sont présents en plus des éléments décrits ci-dessus, associés dans la borne 1 de recharge au premier chargeur 11 et au premier connecteur 13 d'entrée, ainsi que le procédé de charge utilisant le deuxième chargeur 12.

Suivant un mode de réalisation de l'invention, la première tension V1 de charge pouvant être envoyée par le premier chargeur 11 est différente de la deuxième tension V2 de charge pouvant être envoyée par le deuxième chargeur 12. D'une manière générale, la première tension V1 de charge est inférieure à 100 V ou à 50 V et la deuxième tension V2 de charge est inférieure à 100 V ou à 50 V. Par exemple, la première tension V1 de charge pouvant être envoyée par le premier chargeur 11 peut être de 36 V ou de 48 V, tandis que la deuxième tension V2 de charge pouvant être envoyée par le deuxième chargeur 12 peut être de 24 V.

Dans la borne 1 de recharge se trouvent des deuxièmes conducteurs électriques 15 d'envoi de courant de charge, qui sont connectés entre le deuxième chargeur 12 et les extrémités 30 d'envoi de courant de charge présentes dans le deuxième connecteur 130 d'entrée.

Dans la borne 1 de recharge se trouvent au moins deux deuxièmes conducteurs électriques 17 de détection de code, qui sont reliés aux deux deuxièmes extrémités 19 de communication présentes dans le deuxième connecteur 130 d'entrée. Dans la borne 1 de recharge se trouvent au moins deux deuxièmes conducteurs électriques 21 de fourniture de la tension prescrite 114. Ces deux deuxièmes conducteurs électriques 21 de fourniture de la tension prescrite 114 sont reliés aux deux deuxièmes extrémités 23 de fourniture de la tension prescrite 114, présentes dans le deuxième connecteur 130 d'entrée.

Ainsi, lorsque le premier connecteur 101 du câble 100 est branché au connecteur 130 d'entrée de la borne 1 de recharge, les extrémités 112 de détection de tension sont connectées aux extrémités 23 de fourniture de tension, les extrémités 110 de communication sont connectées aux extrémités 19 de communication et les premières extrémités 104 de réception de courant de charge sont connectées aux extrémités 30 d'envoi de courant de charge. La borne 1 de recharge envoie alors la tension prescrite 114 depuis les deux deuxièmes conducteurs électriques 21 de fourniture et via les deux deuxièmes extrémités 23 de fourniture de la tension prescrite 114, les extrémités 112 de détection de tension et les conducteurs électriques 111 de détection de tension au détecteur 1120 de tension électrique. Lorsque le détecteur 1120 de tension électrique du câble 100 a détecté la tension électrique prescrite 114 sur les conducteurs électriques 111 de détection de tension, le circuit 106 de génération du câble 100 envoie le code 107 de connexion prescrit aux conducteurs électriques 109 de communication de code et de là aux deuxièmes conducteurs électriques 17 de détection de code via les extrémités 110 de communication et les extrémités 19 de communication.

Suivant un mode de réalisation de l'invention, lorsque le détecteur 25 a détecté le code 107 de connexion prescrit sur les deuxièmes conducteurs électriques 17 de détection de code, le détecteur 25 émet sur sa deuxième sortie 274 un deuxième signal S3 de présence de code de connexion prescrit ou d'activation du chargeur 12. Lorsque le détecteur 25 n'a pas détecté le code 107 de connexion prescrit sur les deuxièmes conducteurs électriques 17 de détection de code, le détecteur 25 émet sur sa deuxième sortie 274 un deuxième signal S4 d'absence de code de connexion prescrit ou de désactivation du chargeur 12. Le détecteur 25 peut comprendre un deuxième comparateur 272 de code de connexion, configuré pour comparer le code 107 de connexion présent sur les deuxièmes conducteurs électriques 17 de détection de code au code de connexion de vérification 1070 présent dans la mémoire permanente 270. Ce code de connexion de vérification 1070 présent dans la mémoire permanente 270 est le code de connexion 107 prescrit. Lorsque le comparateur 272 ayant effectué la comparaison indique que le code 107 de connexion présent sur les deuxièmes conducteurs électriques 17 de détection de code est égal au code de connexion de vérification 1070 présent dans la mémoire permanente 270, le comparateur 272 indique qu'il a détecté le code de connexion prescrit 107 et fournit le deuxième signal S3 de présence de code de connexion prescrit ou d'activation du chargeur 12. Lorsque le comparateur 272 ayant effectué la comparaison indique que le code présent sur les deuxièmes conducteurs électriques 17 de détection de code n'est pas égal au code de connexion de vérification 1070 présent dans la mémoire permanente 270, le comparateur 272 indique qu'il n'a pas détecté le code de connexion prescrit 107 et fournit le deuxième signal S4 d'absence de code de connexion prescrit ou de désactivation du chargeur 12.

L'unité 24 de contrôle est configurée pour activer le deuxième chargeur 12, lorsque le détecteur 25 de code a détecté le code 107 de connexion prescrit sur les deux deuxièmes conducteurs électriques 17 de détection de code (par exemple en présence du deuxième signal S3 de présence de code de connexion prescrit ou d'activation du chargeur 12). Ainsi, lorsque le premier connecteur 101 du câble 100 est branché au connecteur 130 d'entrée de la borne 1 de recharge et lorsque le deuxième connecteur 102 est branché à l'autre connecteur 201 de la batterie 2, l'unité 24 de contrôle active le deuxième chargeur 12 lorsque le détecteur 25 de code a détecté la présence du code 107 de connexion prescrit sur les deux deuxièmes conducteurs électriques 17 de détection de code. Lorsque le deuxième chargeur 12 est ainsi activé, le deuxième chargeur 12 envoie du courant de charge selon un profil de courant et de tension prescrit dans celui-ci aux le deuxièmes conducteurs électriques 15 d'envoi de courant de charge, et de là à la batterie 200 via les extrémités 30 d'envoi de courant de charge, les premières extrémités 104 de réception de courant de charge, les conducteurs électriques 103 de réception de courant de charge, les deuxièmes extrémités 105 de réception de courant de charge et les extrémités 202 d'envoi de courant de charge présentes dans l'autre connecteur 201. Ainsi, dans ce cas, la borne 1 de recharge a reconnu le code 107 de connexion prescrit du câble 100, ce qui fait que la borne 1 de recharge charge ou recharge la batterie 200 en envoyant le courant de charge depuis la borne 1 de recharge via le câble 100 à la batterie 200 du vélo 2 électrique ou usage électrique.

L'unité 24 de contrôle est configurée pour désactiver le deuxième chargeur 12, lorsque le détecteur 25 de code n'a pas détecté le code 107 de connexion prescrit sur les deuxièmes conducteurs électriques 17 de détection de code (par exemple en présence du deuxième signal S4 d'absence de code de connexion prescrit ou de désactivation du chargeur 12). Ainsi, lorsque le premier connecteur 101 du câble 100 est branché au connecteur 130 d'entrée de la borne 1 de recharge et lorsque le deuxième connecteur 102 est branché à l'autre connecteur 201 de la batterie 2, l'unité 24 de contrôle désactive le deuxième chargeur 12 lorsque le détecteur 25 de code n'a pas détecté la présence du code 107 de connexion prescrit sur les deux deuxièmes conducteurs électriques 17 de détection de code. Lorsque le deuxième chargeur 12 est ainsi désactivé, le deuxième chargeur 12 n'envoie pas de courant de charge aux deuxièmes conducteurs électriques 15 d'envoi de courant de charge, ni à la batterie 200 via les extrémités 30 d'envoi de courant de charge, les premières extrémités 104 de réception de courant de charge, les conducteurs électriques 103 de réception de courant de charge, les deuxièmes extrémités 105 de réception de courant de charge et les extrémités 202 d'envoi de courant de charge présentes dans l'autre connecteur 201. Ainsi, dans ce cas, bien que la batterie 200 du vélo 2 électrique ou usage électrique soit connectée par le câble 100 à la borne 1 de recharge, la borne 1 de recharge n'a pas reconnu le code 107 de connexion prescrit, ce qui fait que la borne 1 de recharge ne recharge pas la batterie 200.

Suivant un mode de réalisation de l'invention, la source 28 de fourniture de la tension prescrite 114 est reliée aux deux conducteurs électriques 21 de fourniture, pour fournir en permanence la tension prescrite 114 sur les deux extrémités 23 de fourniture de la tension prescrite 114 du connecteur 130 d'entrée.

Suivant un mode de réalisation de l'invention, la borne 1 de recharge comporte pour chaque chargeur 11 et/ou 12 respectivement au moins un relais 26 et/ou 27 d'activation et de désactivation du chargeur correspondant 11 et/ou 12. Le relais 26 est commandé par l'unité 24 de contrôle, pour activer le chargeur 11, lorsque le détecteur 25 de code a détecté le code 107 de connexion prescrit sur les deux conducteurs électriques 16 de détection de code, par exemple en présence du premier signal S1 de présence de code de connexion prescrit ou d'activation du chargeur 11 sur la première sortie 273. Le relais 26 est commandé par l'unité 24 de contrôle, pour désactiver le chargeur 11, lorsque le détecteur 25 de code n'a pas détecté le code 107 de connexion prescrit sur les deux conducteurs 16 électriques de détection de code, par exemple en présence du premier signal S2 d'absence de code de connexion prescrit ou de désactivation du chargeur 11 sur la première sortie 273. Le relais 27 est commandé par l'unité 24 de contrôle, pour activer le chargeur 12, lorsque le détecteur 25 de code a détecté le code 107 de connexion prescrit sur les deux conducteurs électriques 17 de détection de code, par exemple en présence du deuxième signal S3 de présence de code de connexion prescrit ou d'activation du chargeur 12 sur la deuxième sortie 274. Le relais 27 est commandé par l'unité 24 de contrôle, pour désactiver le chargeur 12, lorsque le détecteur 25 de code n'a pas détecté le code 107 de connexion prescrit sur les deux conducteurs 17 électriques de détection de code, par exemple en présence du deuxième signal S4 d'absence de code de connexion prescrit ou de désactivation du chargeur 12 sur la deuxième sortie 274.

Suivant un mode de réalisation de l'invention, la borne 1 de recharge la borne 1 de recharge peut comporter des moyens de connexion à un ordinateur distant.

Suivant un mode de réalisation de l'invention, la borne 1 de recharge peut comporter un écran principal 134 de visualisation d'information et/ou un ou plusieurs écrans 132, 133 de visualisation d'information, qui sont visibles sur la surface extérieure 131. Les écrans 132, 133 de visualisation d'information sont par exemple situés à proximité respectivement du premier connecteur 13 d'entrée et du deuxième connecteur 130 d'entrée. L'écran principal 134 de visualisation d'information et/ou le ou les écrans 132, 133 de visualisation d'information servent à afficher des informations pour l'utilisateur, comme par exemple la tension de charge V1, respectivement V2 associée respectivement au premier connecteur 13 d'entrée et au deuxième connecteur 130 d'entrée et/ou un message d'indication de début de charge et/ou un message d'indication de fin de charge et/ou un message de reconnaissance du câble 100 et/ou un message de non-reconnaissance du câble 100 et/ou des informations touristiques.

Suivant un mode de réalisation de l'invention, le chargeur 11 et/ou 12 est du type à recharge rapide d'une batterie 200 de vélo électrique 2 ou à assistance électrique. Par exemple, le chargeur 11 et/ou 12 peut recharger à un courant de charge montant jusqu'à au moins 6 A. Par exemple, le chargeur 12 peut recharger à un courant de charge montant jusqu'à 6A pour la tension V2 de charge de 24 V. Par exemple, le chargeur 11 peut recharger à un courant de charge montant jusqu'à 10 A pour la tension V1 de charge de 36 V ou de 48 V. Ce type de chargeurs 11 et/ou 12 permet de recharger la batterie 200 de vélo électrique 2 ou à assistance électrique à au moins 50 % de capacité en 15 minutes. Le profil de charge du chargeur 11 et/ou 12 peut être à courant de charge ayant d'abord un ou plusieurs paliers bas de courant de charge, puis un ou plusieurs paliers hauts de courant de charge (aux valeurs indiquées ci-dessus), puis un ou plusieurs paliers bas de courant de charge. Par exemple, à 70 % de la charge, le courant de charge diminue.

Suivant un mode de réalisation de l'invention, la borne 1 de recharge peut comporter un premier lecteur 301 pour lire une troisième tension de charge V3 nécessaire à la batterie 200 de vélo électrique 2 ou à assistance électrique, lorsque cette batterie 200 est branchée par le câble 100 sur le premier connecteur 13, ce premier lecteur 301 étant connecté aux premiers conducteurs 14 d'envoi de charge. Ce premier lecteur 301 peut fonctionner indépendamment du code 107 de connexion prescrit, c'est-à-dire aussi bien lorsque le premier chargeur 11 est activé que lorsque le premier chargeur 11 est désactivé. Par exemple, le premier lecteur 301 est configuré pour compter le nombre de cellules de la batterie 200 lorsque la batterie 200 est branchée par le câble 100 sur le premier connecteur 13, pour ainsi calculer la troisième tension de charge V3 nécessaire à la batterie 200 de vélo électrique 2 ou à assistance électrique. L'unité 24 de contrôle est configurée pour autoriser l'activation du premier chargeur 11 à la tension V1 de charge, lorsque la troisième tension de charge V3 nécessaire à la batterie 200 de vélo électrique 2 ou à assistance électrique, ayant été déterminée par le lecteur 301, correspond ou est égale à (ou n'est pas inférieure à) la tension V1 de charge. L'unité 24 de contrôle est configurée pour désactiver le premier chargeur 11, lorsque la troisième tension de charge V3 nécessaire à la batterie 200 de vélo électrique 2 ou à assistance électrique, ayant été déterminée par le lecteur 301, ne correspond pas ou n'est pas égale à (ou est inférieure à) la tension V1 de charge, ce qui fait que le premier chargeur 11 est empêché d'envoyer du courant de charge à la tension V1 de charge à la batterie 200, une information (message d'erreur) indiquant que la batterie n'est pas branchée sur le connecteur 13 à la bonne tension de charge pouvant alors être affichée sur l'écran 132 et/ou 134. Cela évite que l'utilisateur se trompe dans le branchement de son câble sur le connecteur 13.

Suivant un mode de réalisation de l'invention, la borne 1 de recharge peut comporter un deuxième lecteur 302 pour lire une quatrième tension de charge V4 nécessaire à la batterie 200 de vélo électrique 2 ou à assistance électrique, lorsque cette batterie 200 est branchée par le câble 100 sur le deuxième connecteur 130, ce deuxième lecteur 302 étant connecté aux premiers conducteurs 14 d'envoi de charge. Ce deuxième lecteur 302 peut fonctionner indépendamment du code 107 de connexion prescrit, c'est-à-dire aussi bien lorsque le deuxième chargeur 12 est activé que lorsque le deuxième chargeur 12 est désactivé. Par exemple, le deuxième lecteur 302 est configuré pour compter le nombre de cellules de la batterie 200 lorsque la batterie 200 est branchée par le câble 100 sur le deuxième connecteur 130, pour ainsi calculer la quatrième tension de charge V4 nécessaire à la batterie 200 de vélo électrique 2 ou à assistance électrique. L'unité 24 de contrôle est configurée pour autoriser l'activation du deuxième chargeur 12 à la tension V2 de charge, lorsque la quatrième tension de charge V4 nécessaire à la batterie 200 de vélo électrique 2 ou à assistance électrique, ayant été déterminée par le lecteur 302, correspond ou est égale à (ou n'est pas inférieure à) la tension V2 de charge. L'unité 24 de contrôle est configurée pour désactiver le deuxième chargeur 12, lorsque la quatrième tension de charge V4 nécessaire à la batterie 200 de vélo électrique 2 ou à assistance électrique, ayant été déterminée par le lecteur 302, ne correspond pas ou n'est pas égale à (ou est inférieure à) la tension V2 de charge, ce qui fait que le deuxième chargeur 12 est empêché d'envoyer du courant de charge à la tension V2 de charge à la batterie 200, une information (message d'erreur) indiquant que la batterie n'est pas branchée sur le connecteur 130 à la bonne tension de charge pouvant alors être affichée sur l'écran 133 et/ou 134. Cela évite que l'utilisateur se trompe dans le branchement de son câble sur le connecteur 130.

Suivant un mode de réalisation de l'invention, la borne 1 de recharge et/ou l'unité 24 de contrôle peut comporter un module de télécommunication (filaire ou sans fil) pour pouvoir émettre et/ou recevoir des données vers et/ou depuis l'extérieur. Suivant un mode de réalisation de l'invention, la borne 1 de recharge et/ou l'unité 24 de contrôle peut être configurée pour récolter les données de charge et les envoyer sur un serveur extérieur, qui est à distance de la borne 1 de recharge. Ce serveur permet d'analyser l'usage de la borne 1 et d'anticiper les améliorations continues à la suite des comportements des usagers. Suivant un mode de réalisation de l'invention, la borne 1 de recharge et/ou l'unité 24 de contrôle permet de gérer les opérations de recharge en mode sécurisé. Suivant un mode de réalisation de l'invention, le serveur et/ou la borne 1 de recharge et/ou l'unité 24 de contrôle permet de géolocaliser les bornes 1 de recharge disponibles sur le territoire.

Suivant un mode de réalisation de l'invention, dans le cas où plusieurs bornes 1 de recharge sont prévues, les bornes 1 peuvent communiquer entre elles par leur module de télécommunication. Cela permet d'étudier les flux logistiques et d'optimiser leurs emplacements.

Suivant un mode de réalisation de l'invention, il peut être prévu d'augmenter la flexibilité des bornes 1 pour pouvoir délivrer plusieurs tensions de sorties en fonction des usagers d'un véhicule entièrement électrique ou partiellement électrique (par exemple vélo, moto, drones, bateau, camping-car, engins agricoles).

Suivant un mode de réalisation de l'invention, l'unité 24 de contrôle peut servir d'interface entre toutes les entrées et sorties de la borne 1 de recharge : communication, pilotage, contrôle, puissance.

Suivant un mode de réalisation de l'invention, les au moins deux conducteurs électriques 109 de communication de code sont distincts l'un de l'autre. Suivant un mode de réalisation de l'invention, l'un et/ou l'autre des au moins deux conducteurs électriques 109 de communication de code est distinct des autres conducteurs et extrémités.

Suivant un mode de réalisation de l'invention, les au moins deux extrémités 110 de communication sont distinctes l'une de l'autre. Suivant un mode de réalisation de l'invention, l'une et/ou l'autre des au moins deux extrémités 110 de communication est distincte des autres conducteurs et extrémités.

Suivant un mode de réalisation de l'invention, les conducteurs électriques 103 de réception de courant de charge sont distincts l'un de l'autre. Suivant un mode de réalisation de l'invention, l'un et/ou l'autre des conducteurs électriques 103 de réception de courant de charge est distinct des autres conducteurs et extrémités.

Suivant un mode de réalisation de l'invention, les premières extrémités 104 de réception de courant de charge sont distinctes l'une de l'autre. Suivant un mode de réalisation de l'invention, l'une et/ou l'autre des premières extrémités 104 de réception de courant de charge est distincte des autres conducteurs et extrémités.

Suivant un mode de réalisation de l'invention, les deuxièmes extrémités 105 de réception de courant de charge sont distinctes l'une de l'autre. Suivant un mode de réalisation de l'invention, l'une et/ou l'autre des deuxièmes extrémités 105 de réception de courant de charge est distincte des autres conducteurs et extrémités.

Suivant un mode de réalisation de l'invention, les au moins deux conducteurs électriques 111 de détection de tension prescrite d'alimentation du circuit 106 de génération de code sont distincts l'un de l'autre. Suivant un mode de réalisation de l'invention, l'un et/ou l'autre des au moins deux conducteurs électriques 111 de détection de tension prescrite d'alimentation du circuit 106 de génération de code est distinct des autres conducteurs et extrémités.

Suivant un mode de réalisation de l'invention, les au moins deux extrémités 112 de détection de tension sont distinctes l'une de l'autre. Suivant un mode de réalisation de l'invention, l'une et/ou l'autre des au moins deux extrémités 112 de détection de tension est distincte des autres conducteurs et extrémités.

Suivant un mode de réalisation de l'invention, les conducteurs électriques 14 d'envoi de courant de charge sont distincts l'un de l'autre. Suivant un mode de réalisation de l'invention, l'un et/ou l'autre des conducteurs électriques 14 d'envoi de courant de charge est distinct des autres conducteurs et extrémités.

Suivant un mode de réalisation de l'invention, les conducteurs électriques 15 d'envoi de courant de charge sont distincts l'un de l'autre. Suivant un mode de réalisation de l'invention, l'un et/ou l'autre des conducteurs électriques 15 d'envoi de courant de charge est distinct des autres conducteurs et extrémités.

Suivant un mode de réalisation de l'invention, les au moins deux conducteurs électriques 16 de détection de code sont distincts l'un de l'autre. Suivant un mode de réalisation de l'invention, l'un et/ou l'autre des au moins deux conducteurs électriques 16 de détection de code est distinct des autres conducteurs et extrémités.

Suivant un mode de réalisation de l'invention, les au moins deux conducteurs électriques 17 de détection de code sont distincts l'un de l'autre. Suivant un mode de réalisation de l'invention, l'un et/ou l'autre des au moins deux conducteurs électriques 17 de détection de code est distinct des autres conducteurs et extrémités.

Suivant un mode de réalisation de l'invention, les au moins deux extrémités 18 de communication sont distinctes l'une de l'autre. Suivant un mode de réalisation de l'invention, l'une et/ou l'autre des au moins deux extrémités 18 de communication est distincte des autres conducteurs et extrémités.

Suivant un mode de réalisation de l'invention, les au moins deux extrémités 19 de communication sont distinctes l'une de l'autre. Suivant un mode de réalisation de l'invention, l'une et/ou l'autre des au moins deux extrémités 19 de communication est distincte des autres conducteurs et extrémités.

Suivant un mode de réalisation de l'invention, les au moins deux conducteurs électriques 20 de fourniture de la tension prescrite 114 sont distincts l'un de l'autre. Suivant un mode de réalisation de l'invention, l'un et/ou l'autre des au moins deux conducteurs électriques 20 de fourniture de la tension prescrite 114 est distinct des autres conducteurs et extrémités.

Suivant un mode de réalisation de l'invention, les au moins deux conducteurs électriques 21 de fourniture de la tension prescrite 114 sont distincts l'un de l'autre. Suivant un mode de réalisation de l'invention, l'un et/ou l'autre des au moins deux conducteurs électriques 21 de fourniture de la tension prescrite 114 est distinct des autres conducteurs et extrémités.

Suivant un mode de réalisation de l'invention, les au moins deux extrémités 22 de fourniture de la tension prescrite 114 sont distinctes l'une de l'autre. Suivant un mode de réalisation de l'invention, l'un et/ou l'autre des au moins deux extrémités 22 de fourniture de la tension prescrite 114 est distinct des autres conducteurs et extrémités.

Suivant un mode de réalisation de l'invention, les au moins deux extrémités 23 de fourniture de la tension prescrite 114 sont distinctes l'une de l'autre. Suivant un mode de réalisation de l'invention, l'une et/ou l'autre des au moins deux extrémités 23 de fourniture de la tension prescrite 114 est distincte des autres conducteurs et extrémités.

Suivant un mode de réalisation de l'invention, les extrémités 29 d'envoi de courant de charge sont distinctes l'une de l'autre. Suivant un mode de réalisation de l'invention, l'une et/ou l'autre des extrémités 29 d'envoi de courant de charge est distincte des autres conducteurs et extrémités.

Suivant un mode de réalisation de l'invention, les extrémités 30 d'envoi de courant de charge sont distinctes l'une de l'autre. Suivant un mode de réalisation de l'invention, l'une et/ou l'autre des extrémités 30 d'envoi de courant de charge est distincte des autres conducteurs et extrémités.

Suivant un mode de réalisation de l'invention, les extrémités 202 d'envoi de courant de charge sont distinctes l'une de l'autre. Suivant un mode de réalisation de l'invention, l'une et/ou l'autre des extrémités 202 d'envoi de courant de charge est distincte des autres conducteurs et extrémités.

Suivant un mode de réalisation de l'invention, le deuxième connecteur 130 d'entrée est distinct du premier connecteur 13 d'entrée.

Suivant un mode de réalisation de l'invention, le premier chargeur 11 est distinct du deuxième chargeur 12.

Suivant un mode de réalisation de l'invention, le relais 26 est distinct du relais 27.

Bien entendu, les modes de réalisation, caractéristiques, possibilités et exemples décrits ci-dessus peuvent être combinés l'un avec l'autre ou être sélectionnés indépendamment l'un de l'autre.

## Revendications

1. Câble (100), comportant un premier connecteur (101), destiné à être connecté à une borne (1) de recharge, un deuxième connecteur (102), destiné à être connecté à une batterie (200) à recharger de vélo électrique (2) ou à assistance électrique, et des conducteurs électriques (103) de réception de courant de charge, connectés à des premières extrémités (104) de réception de courant de charge présentes dans le premier connecteur (101) et à des deuxièmes extrémités (105) de réception de courant de charge présentes dans le deuxième connecteur (102),
le câble (100) comportant un circuit (106) de génération d'un code (107) de connexion prescrit, comportant une mémoire permanente (108), dans laquelle est enregistré le code (107) de connexion prescrit, et au moins deux conducteurs électriques (109) de communication de code reliés à au moins deux extrémités (110) de communication présentes dans le premier connecteur (101),
le câble (100) ayant au moins deux conducteurs électriques (111) de détection de tension prescrite d'alimentation du circuit (106) de génération de code, qui sont reliés à au moins deux extrémités (112) de détection de tension prescrite d'alimentation du circuit (106) de génération de code présentes dans le premier connecteur (101), **caractérisé en ce que**
le circuit (106) de génération ayant un détecteur (1120) de tension électrique prescrite d'alimentation du circuit (106) de génération de code, qui est relié aux deux conducteurs électriques (111) de détection de tension prescrite d'alimentation du circuit (106) de génération de code,
le circuit (106) de génération étant configuré pour envoyer le code (107) de connexion prescrit aux deux conducteurs électriques (109) de communication de code lorsque le détecteur (1120) de tension électrique prescrite d'alimentation du circuit (106) de génération de code a détecté qu'une tension électrique prescrite (114) d'alimentation du circuit (106) de génération de code est présente entre les deux conducteurs électriques (111) de détection de tension prescrite d'alimentation du circuit (106) de génération de code,
une valeur de la tension électrique prescrite (114) d'alimentation du circuit (106) de génération de code étant préenregistrée dans la mémoire permanente (108) ou dans le détecteur (1120), le détecteur (1120) comparant la tension électrique présente entre les deux conducteurs électriques (111) de détection de tension à la tension électrique prescrite (114) d'alimentation du circuit (106) de génération de code préenregistrée dans la mémoire permanente (108) ou dans le détecteur (1120), pour fournir en cas d'égalité un signal indiquant que le détecteur (1120) de tension électrique a détecté la tension électrique prescrite (114) d'alimentation du circuit (106) de génération de code entre les deux conducteurs électriques (111) de détection de tension et pour fournir en cas d'inégalité un signal indiquant que le détecteur (1120) de tension électrique n'a pas détecté la tension électrique prescrite (114) de tension prescrite d'alimentation du circuit (106) de génération de code entre les deux conducteurs électriques (111) de détection de tension.

2. Câble (100) suivant la revendication 1, **caractérisé en ce que** le circuit (106) de génération est configuré pour ne pas envoyer le code (107) de connexion prescrit aux deux conducteurs électriques (109) de communication de code lorsque le détecteur (1120) de tension électrique n'a pas détecté qu'une tension électrique prescrite (114) est présente entre les deux conducteurs électriques (111) de détection de tension.

## Patentansprüche

1. Kabel (100), aufweisend einen ersten Verbinder (101), der zur Verbindung mit einer Ladesäule (1) bestimmt ist, einen zweiten Verbinder (102), der zur Verbindung mit einer aufzuladenden Batterie (200) eines elektrischen Fahrrads (2) oder eines Fahrrads mit elektrischer Unterstützung bestimmt ist, und elektrische Leiter (103) zum Empfang von Ladestrom, die mit ersten Enden (104) zum Empfang von Ladestrom verbunden sind, die im ersten Verbinder (101) vorhanden sind, und mit zweiten Enden (105) zum Empfang von Ladestrom, die im zweiten Verbinder (102) vorhanden sind,
wobei das Kabel (100) einen Schaltkreis (106) zur Erzeugung eines vorgeschriebenen Verbindungscodes (107) aufweist, der einen Permanentspeicher (108) aufweist, in dem der vorgeschriebene Verbindungscode (107) gespeichert ist, und mindestens zwei elektrische Leiter (109) zur Kommunikation des Codes, die mit mindestens zwei Kommunikationsenden (110) verbunden sind, die im ersten Verbinder (101) vorhanden sind,
wobei das Kabel (100) mindestens zwei elektrische Leiter (111) zur Erfassung einer vorgeschriebenen Versorgungsspannung des Schaltkreises (106) zur Codeerzeugung hat, die mit mindestens zwei Enden (112) zur Erfassung der vorgeschriebenen Versorgungsspannung des Schaltkreises (106) zur Codeerzeugung verbunden sind, die in dem ersten Verbinder (101) vorhanden sind, **dadurch gekennzeichnet, dass**
der Erzeugungsschaltkreis (106) einen Detektor (1120) der vorgeschriebenen elektrischen Versorgungsspannung des Schaltkreises (106) zur Codeerzeugung hat, der mit den zwei elektrischen Leitern (111) zur Erfassung der vorgeschriebenen Versorgungsspannung des Schaltkreises (106) zur Codeerzeugung verbunden ist,
wobei der Erzeugungsschaltkreis (106) dazu ausgelegt ist, den vorgeschriebenen Verbindungscode (107) an die zwei elektrische Leiter (109) zur Kommunikation des Codes zu senden, wenn der Detektor (1120) der vorgeschriebenen elektrischen Versorgungsspannung des Schaltkreises (106) zur Codeerzeugung erfasst hat, dass die vorgeschriebene elektrische Versorgungsspannung (114) des Schaltkreises (106) zur Codeerzeugung zwischen den zwei elektrischen Leitern (111) zur Erfassung der vorgeschriebenen Versorgungsspannung des Schaltkreises (106) zur Codeerzeugung vorhanden ist,
wobei ein Wert der vorgeschriebenen elektrischen Versorgungsspannung (114) des Schaltkreises (106) zur Codeerzeugung im Permanentspeicher (108) oder im Detektor (1120) vorgespeichert ist, wobei der Detektor (1120) die zwischen den zwei elektrischen Leitern (111) zur Spannungserfassung vorhandene elektrische Spannung mit der vorgeschriebenen elektrischen Versorgungsspannung (114) des Schaltkreises (106) zur Codeerzeugung vergleicht, die im Permanentspeicher (108) oder im Detektor (1120) vorgespeichert ist, um bei Gleichheit ein Signal bereitzustellen, das angibt, dass der Detektor (1120) der elektrischen Spannung die vorgeschriebene elektrische Versorgungspannung (114) des Schaltkreises (106) zur Codeerzeugung zwischen den zwei elektrischen Leitern (111) zur Spannungserfassung erfasst hat und um bei Ungleichheit ein Signal bereitzustellen, das angibt, dass der Detektor (1120) der elektrischen Spannung die vorgeschriebene elektrische Versorgungsspannung (114) des Schaltkreises (106) zur Codeerzeugung zwischen den zwei elektrischen Leitern (111) zur Spannungserfassung nicht erfasst hat.

2. Kabel (100) nach Anspruch 1, **dadurch gekennzeichnet, dass** der Erzeugungsschaltkreis (106) dazu ausgelegt ist, den vorgeschriebenen Verbindungscode (107) nicht an die zwei elektrischen Leiter (109) zur Kommunikation des Codes zu senden, wenn der Detektor (1120) der elektrischen Spannung nicht ermittelt hat, dass eine vorgeschriebene elektrische Spannung (114) zwischen den zwei elektrischen Leitern (111) zur Spannungserfassung vorhanden ist.

## Claims

1. A cable (100), comprising a first connector (101), intended to be connected to a charging station (1), a second connector (102), intended to be connected to a battery to be recharged (200) of an electric or electrically-assisted (2) bicycle, and electrical conductors (103) for receiving a charging current, connected to first ends (104) for receiving a charging current present in the first connector (101) and to second ends (105) for receiving a charging current present in the second connector (102),
the cable (100) comprising a circuit (106) for generating a prescribed connection code (107), comprising a permanent memory (108), in which the prescribed connection code (107) is recorded, and at least two code communication electrical conductors (109) connected to at least two communication ends (110) present in the first connector (101),
the cable (100) having at least two electrical conductors (111) for detecting a prescribed supply voltage for the code generation circuit (106), which are connected to at least two ends (112) for detecting the prescribed supply voltage for the code generation circuit (106) present in the first connector (101), **characterized in that**
the generation circuit (106) having a detector (1120) of the prescribed electrical supply voltage for the code generation circuit (106), which is connected to the two electrical conductors (111) for detecting the prescribed supply voltage for the code generation circuit (106),
the generation circuit (106) being configured to send the prescribed connection code (107) to the two electrical code communication conductors (109) when the detector (1120) of the prescribed electrical supply voltage for the code generation circuit (106) has detected that the prescribed electrical supply voltage (114) for the code generation circuit (106) is present between the two electrical conductors (111) for detecting the prescribed supply voltage for the code generation circuit (106),
a value of the prescribed electrical supply voltage (114) for the code generation circuit (106) being pre-recorded in the permanent memory (108) or in the detector (1120), the detector (1120) comparing the electrical voltage present between the two electrical conductors (111) for detecting the voltage to the prescribed electrical supply voltage (114) for the code generation circuit (106) pre-recorded in the permanent memory (108) or in the detector (1120), to provide in case of equality a signal indicating that the electrical voltage detector (1120) has detected the prescribed electrical supply voltage (114) for the code generation circuit (106) between the two electrical conductors (111) for detecting the voltage and to provide in case of inequality a signal indicating that the electrical voltage detector (1120) has not detected the prescribed electrical supply voltage (114) for the code generation circuit (106) between the two electrical voltage detection conductors (111).

2. The cable (100) according to claim 1, **characterized in that** the generation circuit (106) is configured not to send the prescribed connection code (107) to the two electrical code communication conductors (109) when the electrical voltage detector (1120) has not detected that a prescribed electrical voltage (114) is present between the two electrical voltage detection conductors (111).
